Europäisches Patentamt

European Patent Office

Office européen des brevets

(19)

(11) EP 0 555 664 B1

(12) EUROPÄISCHE PATENTSCHRIFT

(45) Veröffentlichungstag und Bekanntmachung des Hinweises auf die Patenterteilung:
29.04.1998 Patentblatt 1998/18

(51) Int Cl.⁶: **H04L 9/08**

(21) Anmeldenummer: 93100810.6

(22) Anmeldetag: 20.01.1993

(54) **Verfahren zur Datensicherung in einem passiven optischen Telekommunikationssystem**

Data protection method in a passive optical telecommunication system

Procédé pour la protection de données dans un système optique passif de télécommunication

(84) Benannte Vertragsstaaten:
AT BE CH DE FR GB IT LI

(30) Priorität: 14.02.1992 DE 4204461

(43) Veröffentlichungstag der Anmeldung:
18.08.1993 Patentblatt 1993/33

(73) Patentinhaber: SIEMENS AKTIENGESELLSCHAFT
80333 München (DE)

(72) Erfinder: Möhrmann, Karl Heinz
81369 München (DE)

(56) Entgegenhaltungen:
EP-A- 0 411 597          US-A- 4 405 829

**Beschreibung**

Neuere Entwicklungen der Fernmeldetechnik führen zu diensteintegrierenden Digitalnetzen (ISDN), die in der Ebene der Teilnehmeranschlußleitungen eine Sternstruktur von Lichtwellenleitern aufweisen; solche mit Lichtwellenleitern ausgestattete diensteintegrierende Digitalnetze (ISDN) sind grundsätzlich für Schmalbandund Breitband-Dienste geeignet (DE-C-24 21 002).

In einem Sternnetz von Lichtwellenleiter-Teilnehmeranschlußleitungen kann für jeden Teilnehmer eine teilnehmerindividuelle, zwischen Teilnehmerstelle und Vermittlungsstelle verlaufende Lichtwellenleiter-Teilnehmeranschlußleitung vorgesehen sein. Um direkt von der Vermittlungsstelle ausgehende Lichtwellenleiter-Teilnehmeranschlußleitungen zu vermeiden, ist es (aus der EP-A2-0 171 080) bekannt, in einem diensteintegrierenden Telekommunikationssystem, in dem Teilnehmerstellen über Lichtwellenleiter-Anschlußleitungen an eine Vermittlungsstelle angeschlossen sind, jeweils eine Mehrzahl von Teilnehmerstellen jeweils über eine eigene Lichtwellenleiter-Teilnehmeranschlußleitung lediglich an einen gemeinsamen optischen Verzweiger anzuschließen, der seinerseits an eine Multiplexanschlußschaltung der Vermittlungsstelle über eine verzweigerindividuelle Lichtwellenleiter-Anschlußleitung angeschlossen ist, wobei die Signalübertragung von der Vermittlungsstelle zu den Teilnehmerstellen hin in einem ISDN-Basisanschluß-(BA-)Multiplexrahmen vor sich geht und die Signalübertragung von den Teilnehmerstellen aus zur Vermittlungsstelle hin jeweils in dem der jeweiligen Teilnehmerstelle zugeordneten Zeitkanal des ISDN-Basisanschluß-Multiplexrahmens in Bursts solcher Dauer und Zeitlage vor sich geht, daß auf der verzweigerindividuellen Lichtwellenleiter-Anschlußleitung ein über die Lichtwellenleiter-Teilnehmeranschlußleitung maximaler Laufzeit übertragener Burst sich noch nicht mit dem im Multiplexrahmen nachfolgenden Burst überschneidet und ein über die Lichtwellenleiter-Teilnehmeranschlußleitung minimaler Laufzeit übertragener Burst sich noch nicht mit dem im Multiplexrahmen vorangehenden Burst überschneidet.

Dieses bekannte Telekommunikationssystem ist ebenso auf die STM(Synchronous Transfer Mode)-Zeitmultiplextechnik für Schmalband-Dienste ausgerichtet wie ein weiteres derartiges (aus ISSLS'88, Conf.Papers 9.4.1...5, und British Telecommunications Engineering 7(1989)4, 237...241) bekanntes passives optisches Telekommunikationssystem, für das zur Erweiterung auf Breitbanddienste ein teilnehmerindividueller Wellenlängenmultiplex sowie ein ATM(Asynchronous Transfer Mode)-Betrieb auf einer gesonderten Wellenlänge genannt wird.

Mit einer solchen Erweiterung erhält man ein (beispielsweise aus EP-A1-0 337 619 bekanntes) passives optisches Telekommunikationssystem, in dem jeweils eine Mehrzahl von Teilnehmerstellen jeweils über eine eigene Lichtwellenleiter-Teilnehmeranschlußleitung mit einem optischen Verzweiger verbunden ist, der direkt oder auch über wenigstens einen weiteren optischen Verzweiger mit einem gemeinsamen Lichtwellenleiteranschluß der Vermittlungsstelle über einen Lichtwellenleiter-Bus verbunden ist,

in dem die Signalübertragung von der Vermittlungsstelle aus zu den Teilnehmerstellen hin in einem ATM-Zellenstrom vor sich geht, aus dem jede Teilnehmerstelle nur die im Header mit einer ebendieser Teilnehmerstelle zugeordneten Kennzeichnung versehenen ATM-Zellen aufnimmt, und

in dem die Signalübertragung von den Teilnehmerstellen aus zur Vermittlungsstelle hin in einem TDMA-Verfahren mit ATM-Zellen vor sich geht, demzufolge eine Teilnehmerstelle jeweils nur nach vorheriger Aufnahme einer an sie adressierten ATM-Zelle ihrerseits eine ATM-Zelle nach einer solchen teilnehmerindividuell bemessenen Verzögerungszeit auszusenden vermag, die sich mit der Laufzeit der aufgenommenen ATM-Zelle und der Laufzeit der ausgesendeten ATM-Zelle zu einer für alle Teilnehmerstellen gleichen vorgegebenen Schleifenlaufzeit zwischen dem Aussenden einer von der betreffenden Teilnehmerstelle aufgenommenen ATM-Zelle durch die Vermittlungsstelle und dem Empfang der danach von der betreffenden Teilnehmerstelle ausgesendeten ATM-Zelle durch die Vermittlungsstelle addiert.

In mit passiven Faserverzweigern gebildeten optischen Doppel-Stern-Netzen, in denen jede dezentrale Telekommunikationseinrichtung die von der zentralen Telekommunikationseinrichtung ausgesendeten Downstream-Informationen empfängt und daraus nur die für sie bestimmten Informationen zwecks Weitergabe an den (die) angeschlossenen Teilnehmer aussortiert, besteht grundsätzlich die Möglichkeit eines Zugriffs auf Informationen, die für andere Teilnehmer bestimmt sind, die an andere dezentrale Telekommunikationseinrichtungen angeschlossen sind.

Dies mag in Telekommunikationssystemen, in denen die dezentralen Telekommunikationseinrichtungen im Besitz des Netzbetreibers sind und z.B. durch Plombieren bis zu einem gewissen Grade gegen unbefugten Eingriff gesichert werden können, noch als tolerabel erscheinen, kann jedoch dort, wo die dezentrale Einrichtung dem Teilnehmer gehört, nicht mehr akzeptiert werden.

Für ein Telecommunikationssystem, in dem eine Mehrzahl von Teilnehmerstellen mit Lichtwellenleiter-Teilnehmeranschlußleitungen über eine oder mehrere optische Verzweigereinrichtung(en) an eine mit einer Vermittlungsstelle verbundene Lichtwellenleiter-Anschlußleitung angeschlossen sind, wobei an einer optischen Verzweigereinrichtung eine oder mehrere Teilnehmerstellen angeschlossen sein können, ist es in diesem Zusammenhang schon (aus DE-C2-39 25 605) bekannt, daß in den Teilnehmerstellen jeweils eine Verwürfelungsschaltung vorgesehen ist, die während des Verbindungsaufbaus zwischen Teilnehmerstelle und Vermittlungsstelle einen Kodierschlüssel initiiert und diesen zur Vermittlungsstelle sendet, wonach die von der Vermittlungsstelle zur Teilnehmerstelle zu übertragenden Digitalsignale mit diesem Kodierschlüssel verschlüsselt gesendet werden.

Diese bekannte Lösung, die prinzipiell auch bei Übertragung von ATM-Zellen funktioniert, schließt indessen damit, daß zu Beginn der Übertragung der zu verwendende Schlüssel von der dezentralen Telekommunikationseinrichtung zur zentralen Einrichtung hin übertragen wird, nicht mit Sicherheit aus, daß ein Unbefugter, der auf irgendeine Weise absichtlich oder auch nur unabsichtlich - und sei es auch nur durch eine Fehlfunktion der elektronischen Einrichtungen im Netz - Zugriff zu diesem Schlüssel erlangt, auch die damit verschlüsselten Downstream-Signale entschlüsseln kann. Unabhängig davon wächst die Gefahr einer unbefugten Entschlüsselung auch dann, wenn eine Verbindung (wie beispielsweise eine Standverbindung) lange besteht, da der Angreifer dann hinreichend Zeit dazu hat.

Die Erfindung zeigt nun einen Weg zu einer wirkungsvolleren Sicherung eines passiven optischen Telekommunikationssystems gegen unberechtigten Zugriff auf die darin übertragenen Digitalsignale.

Die Erfindung betrifft ein Verfahren zur Datensicherung in einem Telekommunikationssystem mit einer zentralen Telekommunikationseinrichtung und einer Mehrzahl von dezentralen Telekommunikationseinrichtungen, die jeweils über eine eigene Lichtwellenleiter-Anschlußleitung mit einem optischen Verzweiger verbunden sind, der direkt oder über wenigstens einen weiteren optischen Verzweiger mit einem gemeinsamen Lichtwellenleiteranschluß der zentralen Telekommunikationseinrichtung über einen Lichtwellenleiter-Bus verbunden ist, wobei die Signalübertragung von der zentralen Telekommunikationseinrichtung aus zu den dezentralen Einrichtungen hin in einem Multiplexrahmen oder in einem ATM-Zellenstrom vor sich geht und die Signalübertragung von den dezentralen Telekommunikationseinrichtungen aus zur zentralen Einrichtung hin jeweils in einem der jeweiligen dezentralen Einrichtung zugeordneten Zeitkanal des Multiplexrahmens - vorzugsweise unter adaptiver Steuerung der Zeitlage des Zeitkanals in einem TDMA-Verfahren - bzw. mittels ATM-Zellen in einem TDMA-Verfahren vor sich geht; dieses Verfahren ist erfindungsgemäß dadurch gekennzeichnet, daß aus einem in einer dezentralen Telekommunikationseinrichtung vorgegebenen geheimen Schlüssel ein öffentlicher Schlüssel ermittelt wird, der in Aufwärtsrichtung zu der zentralen Telekommunikationseinrichtung übermittelt wird, wo mit diesem Schlüssel der Anpassung der dezentralen Einrichtung an in der zentralen Einrichtung für diese dezentrale Einrichtung individuell vorgesehene, wiederholt geänderte Übertragungsmodalitäten dienende Sekundärschlüssel-Informationen - im Gegensatz zu den zu übertragenden Nutzdaten selbst - verschlüsselt werden.

Die Erfindung, die sich bei der Verschlüsselung der Übertragungsmodalitäten-Information eines sog. Public-Key-Systems bedient, bringt den Vorteil mit sich, auf einen Austausch geheimer Schlüssel verzichten zu können und dennoch eine hohe Sicherheit der von der zentralen Kommunikationseinrichtung aus downstream zu den dezentralen Telekommunikationseinrichtungen hin übertragenen Digitalsignale gegen unberechtigten Zugriff und Mithören zu gewährleisten, selbst wenn es sich um relativ lange bestehende Verbindungen (insbes. Standverbindungen) oder auch asymmetrische Verbindungen mit unterschiedlichen Datenraten in den beiden Übertragungsrichtungen handelt. Der erforderliche Rechenaufwand für ein Public-Key-Verfahren ist im Prinzip zwar hoch; da die verschlüsselte Mitteilung neuer Übertragungsmodalitäten aber nur gelegentlich, nämlich im Zusammenhang mit einer von der zentralen Telekommunikationseinrichtung in gewissen zeitlichen Abständen durchgeführten Änderung solcher Modalitäten, notwendig ist, sind die Errechnung des Schlüssel und die Verschlüsselung nicht zeitkritisch, so daß sie mit einem relativ einfachen Rechenwerk off-line per Software bewirkt werden können.

Zur eigentlichen Sicherung des laufenden Digitalsignalstroms kann in weiterer Ausgestaltung der Erfindung die Zuordnung der Zeitschlitze zu den einzelnen dezentralen Telekommunikationseinrichtungen im Downstream-Multiplexrahmen wiederholt geändert werden, indem die zentrale Telekommunikationseinrichtung mittels eines Zufallszahlengenerators eine zufällige neue Zeitschlitzzuordnung für die einzelnen dezentralen Einrichtungen ermittelt und die zeitliche Lage der (des) ihr zugeordneten Zeitschlitze(s) mit einem von der jeweiligen dezentralen Einrichtung übermittelten öffentlichen Schlüssel verschlüsselt der betreffenden dezentralen Einrichtung mitteilt, die diese Mitteilung mit dem zugehörigen geheimen Schlüssel entschlüsselt, wonach die Änderung von einem bestimmten Multiplexrahmen an durchgeführt wird. Zur weiteren Verbesserung der Datensicherheit gegen einen mit entsprechend hohem rechnerischem Aufwand prinzipiell nicht auszuschließenden Angriff auf den geheimen Schlüssel kann in weiterer Ausgestaltung der Erfindung die jeweilige dezentrale Telekommunikationseinrichtung nach einer bestimmten Anzahl von Multiplexrahmen einen von ihr errechneten neuen öffentlichen Schlüssel der zentralen Einrichtung übermitteln, die ihrerseits wiederum nach Ermittlung einer neuen Zeitschlitzzuordnung zu den dezentralen Einrichtungen und neuem Verschlüsseln der jeweiligen Zeitschlitzlage jeder dezentralen Einrichtung individuell die Umordnung der Zeitschlitzzuteilung mitteilt, die danach von einem bestimmten Multiplexrahmen an durchgeführt wird.

Nach einer anderen Ausgestaltung der Erfindung kann die Anfangsstellung und ggf. auch die Struktur von in der zentralen Telekommunikationseinrichtung vorgesehenen, den einzelnen dezentralen Einrichtungen zugeordneten Scramblern und von in den dezentralen Telekommunikationseinrichtungen vorgesehenen Descramblern zu Rahmenbeginn wiederholt geändert werden, indem die zentrale Telekommunikationseinrichtung mittels eines Zufallszahlengenerators jeweils eine zufällige neue Anfangsstellung für die den einzelnen dezentralen Einrichtungen zugeordneten Scrambler ermittelt und die zugehörige Anfangsstellung und ggf. Struktur des zugehörigen Descramblers mit einem von der jeweiligen dezentralen Einrichtung übermittelten öffentlichen Schlüssel verschlüsselt der betreffenden dezentralen Einrichtung mitteilt, die diese Mitteilung mit dem zugehörigen geheimen Schlüssel entschlüsselt, wonach die Änderung von einem bestimmten Pulsrahmen an durchgeführt wird.

Diese Modifikation, die auch auf einzelne dezentrale Telekommunikationseinrichtungen mit besonders sicherheitsbedürftigen Teilnehmern beschränkt werden kann, ist auch bei Übertragung von ATM-Zellen anwendbar: Das in der Zelle enthaltene Nutzsignal wird in der zentralen Einrichtung verscrambelt, und nur die das Ziel der ATM-Zelle bildende dezentrale Einrichtung weiß, wie das Signal zu descrambeln ist, da die zu Beginn des Nutzinformationsteils (payload) der Zelle erfoderliche Anfangsstellung und ggf. auch die Struktur des Scramblers nur ihr verständlich verschlüsselt mitgeteilt wurden.

Zur weiteren Verbesserung der Datensicherheit gegen einen Angriff auf den geheimen Schlüssel kann in weiterer Ausgestaltung der Erfindung die dezentrale Telekommunikationseinrichtung nach einer bestimmten Anzahl von Pulsrahmen einen von ihr errechneten neuen öffentlichen Schlüssel der zentralen Einrichtung übermitteln, die ihrerseits wiederum nach Ermittlung einer neuen Scrambler-Anfangsstellung und ggf. Scrambler-Struktur und neuem Verschlüsseln der jeweils zugehörigen Descrambler-Anfangsstellung und ggf. Descrambler-Struktur jeder dezentralen Einrichtung individuell die Änderung der Anfangsstellung mitteilt, die danach von einem bestimmten Pulsrahmen an durchgeführt wird.

Alle diese Vorgänge brauchen keineswegs für alle dezentralen Einrichtungen gleichzeitig abzulaufen; es genügt vielmehr, daß in weiterer Ausgestaltung der Erfindung die Zeitschlitzzuteilung für verschiedene Gruppen von dezentralen Einrichtungen zu verschiedenen Zeitpunkten geändert wird, was einen Angriff weiter erschwert.

Die Erfindung wird nachfolgend noch weiter erläutert.

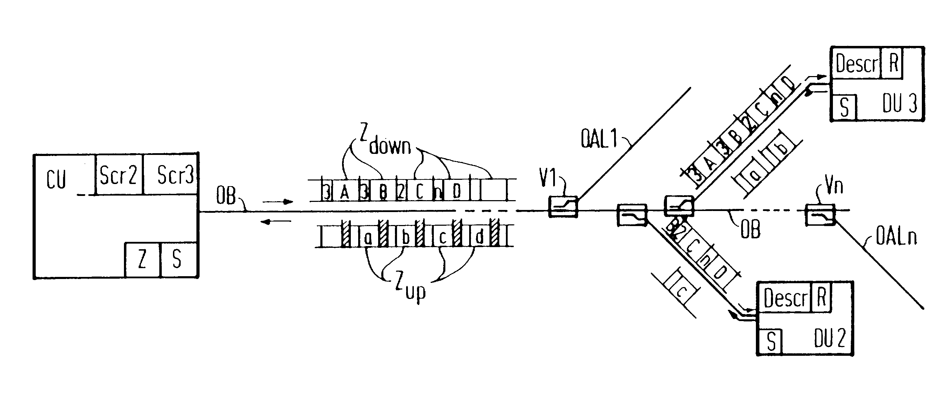

In der Zeichnung ist schematisch in einem zum Verständnis der Erfindung erforderlichen Umfang ein bidirektionales LWL-Telekommunikationssystem mit einem passiven (vorzugsweise Monomode-)LWL-Busnetz dargestellt, das sich zwischen einer zentralen Telekommunikationseinrichtung CU, beispielsweise einer Vermittlungsstelle, und einer Mehrzahl von dezentralen Telekommunikationseinrichtungen ..., DU2, DU3,... , sog. Distant Units oder Teilnehmerstellen, erstreckt. In diesem LWL-Telekommunikationssystem sind die dezentralen Telekommunikationseinrichtungen DU über einen ein- oder mehrfaserigen LWL-Bus OB mit einem gemeinsamen LWL-Multiplexanschluß der zentralen Telekommunikationseinrichtung CU verbunden; die LWL-Anschlußleitungen OAL1 ...OALn mögen dabei über passive, d.h. nicht wellenlängenselektive, optische Verzweiger V1,...Vn mit dem zugehörigen LWL-Bus OB verbunden sein, und zwar entweder direkt, wie in der Zeichnung explizit dargestellt, oder auch über weitere derartige Verzweiger. Als optische Verzweiger können dabei beispielsweise Durchgangsmischer oder optische Richtkoppler Anwendung finden. Es ist auch möglich, für eine Mehrzahl von LWL-Anschlußleitungen einen gemeinsamen optischen Verzweiger vorzusehen, wie dies an sich (z.B. aus der EP-A2-0 171 080) bekannt ist und daher hier nicht näher dargestellt zu werden braucht.

In dem in der Zeichnung skizzierten einfaserigen Telekommunikationssystem kann zur Richtungstrennung ein Wellenlängengetrenntlagebetrieb (bidirektionales Wellenlängenmultiplex) vorgesehen sein, indem zur Signalübertragung in Abwärtsrichtung von der zentralen Telekommunikationseinrichtung CU zu den dezentralen Telekommunikationseinrichtungen DU hin Licht einer beispielsweise im 1300-nm-Band liegenden ersten Wellenlänge und zur Signalübertragung in Aufwärtsrichtung von den dezentralen Telekommunikationseinrichtungen ...,DU2, DU3,... zur zentralen Telekommunikationseinrichtung CU hin Licht einer etwas größeren, beispielsweise im 1500-nm-Band liegenden zweiten Wellenlänge verwendet wird. Hierzu können in der zentralen Telekommunikationseinrichtung ein entsprechender, zweckmäßigerweise durch eine Laserdiode gebildeter elektrooptischer Wandler und ein entsprechender, zweckmäßigerweise durch eine Avalanche- oder PIN-Photodiode gebildeter optoelektrischer Wandler vorgesehen sein, die mit dem zugehörigen LWL-Bus OB über ein wellenlängenselektives optisches Filter, beispielsweise einen (z.B. aus US-A-4 790 616) bekannten, mit einem Interferenz-Strahlteiler versehenen optischen Weichenbaustein, verbunden sind. In entsprechender Weise mögen auch die dezentralen Telekommunikationseinrichtungen ...,DU2, DU3,... mit elektrooptischen und optoelektrischen Wandlern versehen sein.

In dem skizzierten Telekommunikationssystem kann, wie dies auch (z.B. aus EP-A1-0 425 732) bekannt ist, die Signalübertragung von der zentralen Einrichtung CU aus abwärts zu den dezentralen Einrichtungen ... DU2, DU3,... hin in einem ATM-Zellenstrom $Z_{down}$ vor sich gehen. Jede (53 Bit-Oktetts umfassende) ATM-Zelle besteht aus einem (5-Oktett-)Steuerinformationsfeld (Header) und einem (48 Oktetts umfassenden) Nutzinformationsfeld. Teil des Headers ist der (16 Bits umfassende) sog. Virtual Path Identifier; ein anderer Teil des Headers ist das sog. Access Control Field.

In den ATM-Zellenstrom $Z_{down}$ können, wenn gerade keine Nutzinformation zu übertragen ist, Synchronisierzellen mit vorgegebenem Bitmuster zur Synchronisation der Teilnehmerstellen auf den jeweiligen Zellenanfang eingeblendet sein (sog. pure ATM); es ist aber auch möglich, daß der ATM-Zellenstrom $Z_{down}$ seinerseits in eine (z.B. STM-I-)Zeitrahmenstruktur mit in bestimmten festen Abständen auftretenden Synchronisiersignalen (Overhead) eingebettet ist (sog. frame structured ATM). Aus dem ATM-Zellenstrom $Z_{down}$ entnimmt jede dezentrale Einrichtung DU nur diejenigen ATM-Zellen, die in ihrem Header, vorzugsweise in dessen Virtual Path Identifier, mit (einer) eben dieser dezentralen Einrichtung DU bzw. dem (den) an ihr angeschlossenen Teilnehmer(n) zugeordneten Kennzeichnung(en) adressiert sind. In der Zeichnung ist für vier ATM-Zellen des ATM-Zellenstroms $Z_{down}$ die Unterteilung in Header und Nutzinformationsfeld verdeutlicht, wobei mit den in den Headern dieser vier ATM-Zellen angegebenen Kennzeichnungen (3, 3, 2, n) angedeutet wird, daß die - Nutzinformation C tragende - dritte Zelle für die dezentrale Einrichtung DU2 bestimmt ist und daß die - eine Nutzinformation D tragende - vierte Zelle für eine in der Zeichnung nicht mehr dargestellte, über die LWL-Teilnehmeranschlußleitung OALn erreichte dezentrale Einrichtung bestimmt ist.

In der umgekehrten Übertragungsrichtung geht dann die Signalübertragung von den dezentralen Einrichtungen DU aufwärts zur zentralen Einrichtung CU hin in einem TDMA-Verfahren mit ATM-Zellen $Z_{up}$ vor sich, indem eine dezentrale Einrichtung DU jeweils nur nach vorheriger Aufnahme einer an sie adressierten ATM-Zelle des ATM-Zellenstroms $Z_{down}$ nun ihrerseits eine ATM-Zelle abzugeben vermag, und zwar nach einer DU-individuell bemessenen Verzögerungszeit. Diese Verzögerungszeit ist dabei so bemessen, daß sie sich mit der Laufzeit $t_{down}$ der ATM-Zellen von der zentralen Einrichtung CU bis zu der betreffenden dezentralen Einrichtung DU und der Laufzeit $t_{up}$ von der betreffenden dezentralen Einrichtung DU zur zentralen Einrichtung CU zu einer für alle dezentralen Einrichtungen ..., DU2, DU3, ... gleichen vorgegebenen Schleifenlaufzeit zwischen dem Aussenden einer von der betreffenden dezentralen Einrichtung DU aufzunehmenden ATM-Zelle durch die zentrale Einrichtung CU und dem Empfang der danach von der betreffenden dezentralen Einrichtung DU ausgesendeten ATM-Zelle durch die zentrale Einrichtung CU addiert.

Wenn, wie dies ebenfalls (z.B. aus EP-C2-0 171 080) bekannt ist, die Signalübertragung von der zentralen Telekommunikationseinrichtung CU zu den dezentralen Telekommunikationsstellen DU hin beispielsweise in einem ISDN-Basisanschluß(BA)-Multiplexrahmen vor sich geht, erhält jede der dezentralen Einrichtungen DU das volle (beispielsweise 2-Mbit/s-)Multiplexsignal, wobei dann die einzelnen dezentralen Einrichtungen DU jeweils nur die in dem der jeweiligen Einrichtung DU zugeordneten Zeitkanal empfangenen Signale an den jeweiligen Teilnehmer weitergeben. Dies kann in an sich bekannter Weise durch ein jeweils mit dem Pulsrahmenanfang beginnendes Abzählen der Zeitschlitze geschehen, ohne daß hier noch näher darauf eingegangen werden müßte.

In der umgekehrten Übertragungsrichtung geht dann die Signalübertragung von den dezentralen Einrichtungen DU aus zur zentralen Einrichtung CU hin jeweils in dem der jeweiligen dezentralen Einrichtung DU zugeordneten Zeitkanal des ISDN-BA-Multiplexrahmens in Bursts vor sich: Jede dezentrale Einrichtung DU sendet, nachdem sie ihr Zeitfach im empfangenen Multiplexrahmen erkannt hat, ihre Information in einem Burst zur zentralen Einrichtung CU. Dieser Burst ist so kurz, d.h. wird mit so hoher Bitrate gesendet, daß Längen- und damit Laufzeitunterschiede der einzelnen Anschlussleitungen OAL ohne störende Auswirkungen bleiben. Dazu können die Bursts innerhalb des der jeweiligen dezentralen Einrichtung zugeordneten Zeitkanals jeweils eine solche Dauer und Zeitlage aufweisen, daß auf dem LWL-Bus OB ein über eine Lichtwellenleiter-Anschlußleitung OAL maximaler Laufzeit übertragener Burst sich noch nicht mit dem im Multiplexrahmen nachfolgenden Burst und ein über eine Lichtwellenleiter-Anschlußleitung OAL minimaler Laufzeit übertragener Burst sich noch nicht mit dem im Multiplexrahmen vorangehenden Burst überschneidet.

Beliebige andere Ausführungsbeispiele sind möglich. Eine Vielzahl solcher Beispiele ist aus einschlägigen Veröffentlichungen zum Thema "Fiber to the Home" bekannt.

Wie in der Zeichnung angedeutet ist, sind die dezentralen Einrichtungen ..., DU2, DU3, ... jeweils mit einem Descrambler Descr versehen, der das für die betreffende dezentrale Einrichtung bestimmte, in der zentralen Einrichtung CU verscrambelte Digitalsignal entscrambelt. Die zentrale Einrichtung CU weist zum Verscrambeln je dezentraler Einrichtung ..., DU2, Du3, ... jeweils einen eigenen Scrambler ..., Scr2, Scr3, ... auf. Dieser muß nicht in Hardware realisiert sein, sondern kann mittels Software oder mittels einer einzigen, umschaltbaren Hardware-Struktur realisiert sein.

Scrambler und Decrambler werden wiederholt verändert; dazu wird die notwendige Anfangsstellung für den Descrambler Descr der dezentralen Einrichtung DU jeweils rechtzeitig von der zentralen Einrichtung CU mit einem sog. Public Key verschlüsselt mitgeteilt. Hierzu geben sich die dezentralen Einrichtungen DU einen geheimen Schlüssel vor und ermitteln dazu einen öffentlichen Schlüssel, was jeweils mit einem in den dezentralen Einrichtungen DU vorgesehenen Rechner R geschehen kann. Mit dem zur zentralen Einrichtung CU hin übertragenen öffentlichen Schlüssel verschlüsselt wird die genannte Information über die Anfangsstellung des Decramblers Descr gewissermaßen als eine Sekundärschlüsselinformation von der zentralen Einrichtung CU ausgesendet; entschlüsselt werden kann diese Information über die geänderten Übertragungsmodalitäten nur mit dem zugrunde liegenden geheimen Schlüssel und damit nur von derjenigen dezentralen Einrichtung DU, für die die betreffende Information bestimmt ist.

Public-Key-Verfahren sind an sich (z.B. aus ntz 38 (1985) 9, 636...638 bekannt; sie verwenden zur Schlüsselbildung sog. one-way-Funktionen. Bei one-way-Funktionen handelt es sich um Funktionen, deren Funktionswert relativ einfach zu berechnen ist, während die Berechnung der Inversen kaum möglich ist. "Einfach" und "kaum möglich" meint dabei den rechnerischen Aufwand und hängt somit vom Entwicklungsstand der jeweiligen Computergeneration ab. (Jansen, Pohlmann: "Kryptographie in der Telematik", ntz 38 (1985)9, 636...638):

So beruht ein bekanntes Public-Key-Verfahren beispielsweise darauf, daß es ganz einfach ist, durch Multiplikation einer Anzahl von Primzahlen eine große natürliche Zahl zu errechnen, daß es aber kaum möglich ist, diese große natürliche Zahl wieder in ihre Primfaktoren zu zerlegen (Rivest, Shamir, Adleman: "A method for obtaining digital signatures and public-key cryptosystems", Communications of the ACM 21(1978)2, 120...126). Bei diesem bekannten Verfahren wird aus einem Klartext M ein Schlüsseltext C durch eine mathematische Tranformation

$$C = M^e \ (\mathrm{mod}\ n)$$

erhalten. Die inverse Transformation, mit der man aus dem Schlüsseltext wieder den Klartext erhält, lautet

$$M = C^d \ (\mathrm{mod}\ n).$$

M ist eine positive ganze Zahl, die zwischen 0 und n-1 liegen muß. Es ergeben sich dann die Schlüsselpaare

(e,n) für den öffentlichen Schlüssel und
(d,n) für den geheimen Schlüssel.

Bei der Errechnung der Schlüssel wird zunächst n als Produkt aus zwei sehr großen, frei gewählten Primzahlen p und q berechnet (diese Zahlen werden mittels eines Zufallszahlengenerators erzeugt und bleiben geheim):

$$n = p \bullet q,$$

mit p ungleich q.
Da es zu enormen Schwierigkeiten führt, umgekehrt aus n die Primzahlen p und q zu ermitteln, kann n als Bestandteil des öffentlichen Schlüssels bekanntgegeben werden.

Als geheimer Schlüssel d wird eine große (in ernsthaften Anwendungen ca. 100stellige), frei gewählte ganze Zahl verwendet, die relativ prim zu (p-1)•(q-1) sein muß. Hat man so p, q und d bestimmt, so läßt sich der öffentliche Schlüssel e durch "Inverse Multiplikation":

$$e \bullet d \ (\mathrm{mod}(p\text{-}1) \bullet (q\text{-}1)) = 1$$

erzeugen. Für Primzahlerzeugung und Schlüsselgenerierung existieren spezielle mathematische Algorithmen. Auf Grund der komplexen Rechtenvorgänge ist die mögliche Durchsatzrate allerdings gering (einige zig bit/s).

Die Anfangsstellung der in der zentralen Telekommunikationseinrichtung CU vorgesehenen, den einzelnen dezentralen Einrichtungen DU zugeordneten Scrambler Scr und der in den dezentralen Kommunikationseinrichtungen DU vorgesehenen Descrambler Descr kann wiederholt geändert werden, indem die zentrale Telekommunikationseinrichtung CU mittels eines Zufallszahlengenerators Z jeweils eine zufällige neue Anfangsstellung für die den einzelnen dezentralen Einrichtungen DU zugeordneten Scrambler Scr ermittelt und die jeweils zugehörige Anfangsstellung des zugehörigen Descramblers Descr mit dem öffentlichen Schlüssel verschlüsselt der betreffenden dezentralen Einrichtung DU mitteilt; dort wird diese Mitteilung mit dem zugehörigen geheimen Schlüssel entschlüsselt, wonach die Änderung von einem bestimmten Pulsrahmen an durchgeführt wird.

Die dezentrale Telekommunikationseinrichtung DU kann in gewissen Zeitabständen neue Schlüssel errechnen und den von ihr errechneten neuen öffentlichen Schlüssel der zentralen Einrichtung CU übermitteln; die zentrale Einrichtung CU kann dann nach Ermittlung einer neuen Scrambler-Anfangsstellug die zugehörige Descrambler-Anfangsstellung mit dem neuen öffentlichen Schlüssel verschlüsseln und der betreffenden dezentralen Einrichtung DU die Änderung der Anfangsstellung mitteilen, die dann wiederum von einem bestimmten Pulsrahmen an durchgeführt wird. Nicht nur die Anfangseinstellung, sondern auch die Struktur von Scrambler und Descrambler können zur Erschwerung unbefugten Mithörens in regelmäßigen oder unregelmäßigen Zeitabständen verändert werden.

Eine andere Möglichkeit der Sicherung eines passiven optischen Telekommunikationssystems gegen unberechtigten Zugriff auf darin in Multiplexrahmen übertragene Digitalsignale besteht beispielsweise darin, daß die Zuordnung der Zeitschlitze zu den einzelnen dezentralen Telekommunikationseinrichtungen DU in dem für die Signalübertragung von der zentralen Einrichtung CU zu den dezentralen Einrichtungen DU hin maßgebenden Downstream-Multiplexrahmen wiederholt geändert wird: Die zentrale Telekommunikationseinrichtung CU ermittelt dabei mittels eines Zufallszahlengenerators eine zufällige neue Zeitschlitzzuordnung für die einzelnen dezentralen Einrichtungen DU und teilt die zeitliche Lage der (des) ihr zugeordneten Zeitschlitze(s) mit dem von der jeweiligen dezentralen Einrichtung DU übermittelten öffentlichen Schlüssel verschlüsselt der betreffenden dezentralen Einrichtung DU mit; in der dezentralen Einrichtung DU wird diese Mitteilung mit dem zugehörigen geheimen Schlüssel entschlüsselt, wonach die Änderung von einem bestimmten Multiplexrahmen an durchgeführt wird.

Auch hier kann die dezentrale Telekommunikationseinrichtung DU von Zeit zu Zeit neue Schlüssel errechnen und den von ihr errechneten neuen öffentlichen Schlüssel der zentralen Einrichtung CU übermitteln, die dann von der nächsten Änderung der Zeitschlitzzuordnung an die jeweils neue Zeitschlitzlage mit dem neuen öffentlichen Schlüssel verschlüsselt der betreffenden dezentralen Einrichtung DU mitteilt. Die dezentrale Einrichtung DU kann nicht über längere Zeit auf einen nicht ihr zugeordneten Zeitschlitz zugreifen, was ein unbefugtes Mithören unmöglich macht.

Die in der Zeichnung in der zentralen Telekommunikationseinrichtung CU und in den dezentralen Telekommunikationseinrichtungen DU angedeuteten Schlüsseleinrichtungen S als solche können in an sich bekannter Weise in Form digitaler Rechenwerke ausgeführt sein, so daß weitere Erläuterungen dazu an dieser Stelle nicht erforderlich sind; das gleiche gilt auch für den in der zentralen Telekommunikationseinrichtung CU angedeuteten Zufallszahlengenerator Z.

**Patentansprüche**

1.  Verfahren zur Datensicherung in einem Telekommunikationssystem mit einer zentralen Telekommunikationseinrichtung (CU) und einer Mehrzahl von dezentralen Telekommunikationseinrichtungen (DU), die jeweils über eine eigene Lichtwellenleiter-Anschlußleitung (OAL1, ..., OALn) mit einem optischen Verzweiger (V1, ... Vn) verbunden sind, der direkt oder über wenigstens einen weiteren optischen Verzweiger mit einem gemeinsamen Lichtwellenleiteranschluß der zentralen Telekommunikationseinrichtung (CU) über einen Lichtwellenleiter-Bus (OB) verbunden ist, wobei die Signalübertragung von der zentralen Telekommunikationseinrichtung (CU) aus zu den dezentralen Einrichtungen (DU) hin in einem Multiplexrahmen oder in einem ATM-Zellenstrom vor sich geht und die Signalübertragung von den dezentralen Telekommunikationseinrichtungen (DU) aus zur zentralen Einrichtung (CU) hin jeweils in einem der jeweiligen dezentralen Einrichtung (DU) zugeordneten Zeitkanal des Multiplexrahmens - vorzugsweise unter adaptiver Steuerung der Zeitlage des Zeitkanals in einem TDMA-Verfahren - bzw. mittels ATM-Zellen in einem TDMA-Verfahren vor sich geht,
    **dadurch gekennzeichnet,**
    daß aus einem in einer dezentralen Telekommunikationseinrichtung (DU) vorgegebenen geheimen Schlüssel ein öffentlicher Schlüssel ermittelt wird, der in Aufwärtsrichtung zur zentralen Telekommunikationseinrichtung (CU) übermittelt wird, wo mit diesem Schlüssel der Anpassung der dezentralen Einrichtung (DU) an in der zentralen Einrichtung (CU) für diese dezentrale Einrichtung (DU) individuell vorgesehene, wiederholt geänderte Übertragungsmodalitäten dienende Sekundärschlüssel-Informationen - im Gegensatz zu den zu übertragenden Nutzdaten selbst - verschlüsselt werden.

2.  Verfahren nach Anspruch 1,
    **dadurch gekennzeichnet,**
    daß die Zuordnung der Zeitschlitze zu den einzelnen dezentralen Telekommunikationseinrichtungen (DU) im Downstream-Multiplexrahmen wiederholt geändert wird, indem die zentrale Telekommunikationseinrichtung (CU) mittels eines Zufallszahlengenerators eine zufällige neue Zeitschlitzzuordnung für die einzelnen dezentralen Einrichtungen (DU) ermittelt und die zeitliche Lage der (des) ihr zugeordneten Zeitschlitze(s) mit einem von der jeweiligen dezentralen Einrichtung (DU) übermittelten öffentlichen Schlüssel verschlüsselt der betreffenden dezentralen Einrichtung (DU) mitteilt, die diese Mitteilung mit dem zugehörigen geheimen Schlüssel entschlüsselt, wonach die Änderung von einem bestimmten Multiplexrahmen an durchgeführt wird.

3.  Verfahren nach Anspruch 2,
    **dadurch gekennzeichnet,**
    daß die dezentrale Telekommunikationseinrichtung (DU) nach einer bestimmten Anzahl von Multiplexrahmen einen von ihr errechneten neuen öffentlichen Schlüssel der zentralen Einrichtung (CU) übermittelt, die ihrerseits wiederum nach Ermittlung einer neuen Zeitschlitzzuordnung zu den dezentralen Einrichtungen (DU) und neuem Verschlüsseln der jeweiligen Zeitschlitzlage jeder dezentralen Einrichtung (DU) individuell die Umordnung der Zeitschlitzzuteilung mitteilt, die danach von einem bestimmten Multiplexrahmen an durchgeführt wird.

4.  Verfahren nach Anspruch 1,
    **dadurch gekennzeichnet,**
    daß die Anfangsstellung und/oder die Struktur von in der zentralen Telekommunikationseinrichtung (CU) vorgesehenen, den einzelnen dezentralen Einrichtungen (DU) zugeordneten Scramblern (Scr) und von in den dezentralen Telekommunikationseinrichtungen (DU) vorgesehenen Descramblern (Descr) zu Rahmenbeginn wiederholt geändert wird, indem die zentrale Telekommunikationseinrichtung (CU) mittels eines Zufallszahlengenerators jeweils eine zufällige neue Anfangsstellung und/oder Struktur für die den einzelnen dezentralen Einrichtungen (DU) zugeordneten Scrambler (Scr) ermittelt und die zugehörige Anfangsstellung und/ oder Struktur des zugehörigen Descramblers (Descr) mit einem von der jeweiligen dezentralen Einrichtung (DU) übermittelten öffentlichen Schlüssel verschlüsselt der betreffenden dezentralen Einrichtung (DU) mitteilt, die diese Mitteilung mit dem zugehörigen geheimen Schlüssel entschlüsselt, wonach die Änderung von einem bestimmten Pulsrahmen an durchgeführt wird.

5. Verfahren nach Anspruch 4,
   **dadurch gekennzeichnet,**
   daß die dezentrale Telekommunikationseinrichtung (DU) nach einer bestimmten Anzahl von Pulsrahmen einen von ihr errechneten neuen öffentlichen Schlüssel der zentralen Einrichtung (CU) übermittelt, die ihrerseits wiederum nach Ermittlung einer neuen Scrambler-Anfangsstellung und/oder Struktur und neuem Verschlüsseln der jeweils zugehörigen Descrambler-Anfangsstellung und/oder Struktur jeder dezentralen Einrichtung (DU) individuell die Änderung der Anfangsstellung und/oder Struktur mitteilt, die danach von einem bestimmten Pulsrahmen an durchgeführt wird.

6. Verfahren nach einem der Ansprüch 1 bis 5,
   **dadurch gekennzeichnet,**
   daß die Übertragungsmodalitäten für verschiedene dezentrale Einrichtungen (DU) oder Gruppen von dezentralen Einrichtungen (DU) zu verschiedenen Zeitpunkten geändert werden.

**Claims**

1. Method for protecting data in a telecommunications system having a central telecommunications device (CU) and a plurality of decentralized telecommunications devices (DU) which are each connected via a separate optical waveguide connecting line (OAL1, ..., OALn) to an optical splitter (V1, ... Vn) which is connected directly, or via at least one further optical splitter, to a common optical waveguide connection of the central telecommunications device (CU) via an optical waveguide bus (OB), the transmission of signals from the central telecommunications device (CU) to the decentralized devices (DU) taking place in a multiplex frame or in an ATM cell stream, and the transmission of signals from the decentralized telecommunications devices (DU) to the central device (CU) taking place in each case in a time slot, assigned to the respective decentralized device (DU), of the multiplex frame - preferably with adaptive control of the timing of the time slot using a TDMA method - or by means of ATM cells using a TDMA method, characterized in that a public key is determined from a secret key prescribed in a decentralized telecommunications device (DU), said key being transferred in the upwards direction to the central telecommunications device (CU) where said key is used to encrypt - in contrast with the actual useful data to be transmitted - secondary key information which serves to adapt the decentralized device (DU) to repeatedly changed transmission modalities which are individually provided in the central device (CU) for this decentralized device (DU).

2. Method according to Claim 1, characterized in that the assignment of the time slots to the individual decentralized telecommunications devices (DU) is repeatedly changed in the downstream multiplex frame in that the central telecommunications device (CU) determines, by means of a random number generator, a random, new time slot assignment for the individual decentralized devices (DU), and communicates to the respective decentralized device (DU), in a form in which it is encrypted using a public key transmitted by the respective decentralized device (DU), the timing of the time slot, or slots, assigned to the said telecommunications device, the said decentralized device (DU) decrypting this communication using the associated secret key, after which the change is carried out starting from a specific multiplex frame.

3. Method according to Claim 2, characterized in that the decentralized telecommunications device (DU) transmits a new public key, which it has calculated, to the central device (CU) after a specific number of multiplex frames, said central device (CU) itself in turn communicating individually to each decentralized device (DU) the reordering of the time slot assignment after a new time slot assignment to the decentralized devices (DU) has been determined and after the respective time slot position has been encrypted again, said reordering then being carried out starting from a specific multiplex frame.

4. Method according to Claim 1, characterized in that the starting position and/or the structure of scramblers (Scr) which are provided in the central telecommunications device (CU) and are assigned to the individual decentralized devices (DU) and of descramblers (Descr) provided in the decentralized telecommunications devices (DU) is repeatedly changed at the start of the frame in that the central telecommunications device (CU) determines, by means of a random number generator, in each case a random new starting position and/or structure for the scramblers (Scr) assigned to the individual decentralized devices (DU') and communicates to the respective decentralized device (DU) the associated starting position and/or structure of the associated descrambler (Descr) in a form in which it is encrypted using a public key transmitted by the respective decentralized device (DU), the said decentralized device (DU) decrypting this communication using the associated secret key, after which the change is carried out starting from a specific pulse frame.

5.  Method according to Claim 4, characterized in that the decentralized telecommunications device (DU) transmits a new public key, which it has calculated, to the central device (CU) after a specific number of pulse frames, said central device (CU) itself in turn individually communicating to each decentralized device (DU) the change in the starting position and/or structure after a new scrambler starting position and/or structure has been determined and the respectively associated descrambler starting position and/or structure has been encrypted again, said change then being carried out starting from a specific pulse frame.

6.  Method according to one of Claims 1 to 5, characterized in that the transmission modalities for various decentralized devices (DU) or groups of decentralized devices (DU) are changed at different times.

## Revendications

1.  Procédé pour la protection des données dans un système de télécommunication avec un dispositif central de télécommunication (CU) et une pluralité de dispositifs périphériques de télécommunication (DU), qui sont reliés chacun par une ligne de raccordement (OAL1, ..., OALn), qui leur est propre et qui est constituée d'un guide d'ondes lumineuses, à un distributeur optique (V1, ..., Vn) qui est relié, soit directement soit par l'intermédiaire d'au moins un autre distributeur optique, à un point de raccordement commun pour guides d'ondes lumineuses de l'installation centrale de télécommunication (CU) à travers un bus (OB) à guide d'ondes lumineuses, la transmission des signaux à partir de l'installation centrale de télécommunication (CU) vers les installations périphériques de télécommunication (DU) ayant lieu dans une trame de multiplexage ou dans un flux de cellules ATM et la transmission des signaux à partir des installations périphériques de télécommunication (DU) vers l'installation centrale de télécommunication (CU) ayant lieu, respectivement, dans une voie temporelle de la trame de multiplexage allouée à chaque installation périphérique (DU) - de préférence sous commande auto-ajustable de la position dans le temps de la voie temporelle, suivant une procédure d'accès multiple à répartition dans le temps (procédure AMRT ou TDMA) - ou au moyen de cellules ATM suivant une procédure d'accès multiple à répartition dans le temps (procédure AMRT ou TDMA),
**caractérisé**
par le fait qu'une clef publique est déterminée à partir d'une clef secrète prédéfinie dans une installation périphérique de télécommunication (DU), cette clef publique étant communiquée dans le sens ascendant à l'installation centrale de télécommunication (CU), dans laquelle sont cryptées, avec cette clef publique, - contrairement aux données utiles elles-mêmes, qui doivent être transmises - des informations concernant une clef secondaire et servant à l'adaptation de l'installation périphérique (DU) à des modalités de transmission prévues individuellement, dans l'installation centrale (CU), pour cette installation périphérique (DU) et modifiées de façon répétée.

2.  Procédé selon la revendication 1
**caractérisé**
par le fait que l'ordre d'allocation des tranches de temps à chacune des installations périphériques de télécommunication (DU) est modifié de façon répétitive dans la trame de multiplexage dans le sens descendant (ou downstream), l'installation centrale de télécommunication (CU) déterminant, au moyen d'un générateur de nombres aléatoires, une nouvelle allocation aléatoire des tranches de temps pour chacune des installations périphériques (DU) et communiquant, à l'installation périphérique (DU) concernée, sous une forme cryptée avec une clef publique communiquée par l'installation périphérique (DU) respective, la position dans le temps de la tranche ou des tranches de temps qui lui sont allouées, cette installation périphérique (DU) décryptant cette information avec la clef secrète correspondante, à la suite de quoi la modification est exécutée à partir d'une trame de multiplexage déterminée.

3.  Procédé selon la revendication 2
**caractérisé**
par le fait que l'installation périphérique de télécommunication (DU) communique à l'installation centrale (CU), après un nombre défini de trames de multiplexage, une nouvelle clef publique qu'elle a calculée, l'installation centrale (CU) communiquant de son côté en retour, après avoir déterminé une nouvelle allocation des tranches de temps et après avoir crypté de nouveau la position respective des tranches de temps, le nouvel ordre d'allocation des tranches de temps à chaque installation périphérique (DU), ce nouvel ordre d'allocation étant ensuite appliqué à partir d'une trame de multiplexage déterminée.

4.  Procédé selon la revendication 1
    **caractérisé**
    par le fait que le point de départ et/ou la structure des crypteurs (Scr) prévus dans l'installation centrale de télécommunication (CU) et alloués à chacune des installations périphériques de télécommunication (DU) et des décrypteurs (Descr) prévus dans les installations périphériques de télécommunication (DU) sont modifiés de façon répétée en début de trame, l'installation centrale de télécommunication (CU) déterminant au moyen d'un générateur de nombres aléatoires un nouveau point de départ aléatoire et/ou une nouvelle structure aléatoire pour chacun des crypteurs (Scr) alloués à chacune des installations périphériques (DU) et communique, sous forme cryptée avec une clef publique transmise par l'installation périphérique (DU). respective, le point de départ et/ou la structure correspondants du décrypteur (Descr) à l'installation périphérique (DU) concernée, laquelle décrypte cette information avec la clef secrète correspondante, à la suite de quoi la modification est: exécutée à partir d'une trame d'impulsions déterminée.

5.  Procédé suivant la revendication 4
    **caractérisé**
    par le fait que l'installation périphérique de télécommunication (DU) transmet, après un nombre déterminé de trames d'impulsions, une nouvelle clef publique, qu'elle a calculée, à l'installation centrale (CU), laquelle, de son côté, transmet en retour, après avoir déterminé un nouveau point de départ et/ou une nouvelle structure du crypteur et après avoir de nouveau crypté le point de départ et/ou la structure du décrypteur respectif, individuellement à chaque installation périphériques (DU) la modification du point de départ et/ou de la structure, laquelle est ensuite exécutée à partir d'une trame d'impulsions déterminée.

6.  Procédé selon une des revendications 1 à 5
    **caractérisé**
    par le fait que les modalités de transmission pour diverses installations périphériques (DU) ou groupes d'installations périphériques (DU) sont modifiées à des instants différents.